# EUROPÄISCHE PATENTSCHRIFT

(11) **EP 0 564 694 B1**
(45) Veröffentlichungstag und Bekanntmachung des Hinweises auf die Patenterteilung: **12.03.1997**
(21) Anmeldenummer: 92114563.7
(22) Anmeldetag: 26.08.1992
(51) Int. Cl.: C08L 75/04, C08J 5/18

(54) **Folie und Formkörper aus einem thermoplastischen Material auf der Basis von Polyurethanen**
Film and shaped body made of thermoplastic material based on polyurethane
Feuille et corps moulé de matériau thermoplastique à base de polyuréthane

(30) Priorität: 04.04.1992 DE 4211414
(43) Veröffentlichungstag der Anmeldung: 13.10.1993
(73) Patentinhaber: Benecke-Kaliko Aktiengesellschaft, D-30419 Hannover (DE)
(72) Erfinder: Kopytko, Walter, Dipl.-Ing., W-8264 Waldkraiburg (DE)
(74) Vertreter: Hagemann, Heinrich, Dr.rer.nat., Dipl.-Chem.

(56) Entgegenhaltungen:
- DE-A- 4 018 716

## Beschreibung

Die Erfindung betrifft eine Folie und einen Formkörper aus einem thermoplastischen Material auf der Basis von Polyurethanen, mindestens eines weiteren modifizierenden Polymerisats und/oder Elastomers und gegebenenfalls weiterer Zusatzstoffe.

Eine Folie der oben beschriebenen Art geht aus der DE-A-40 18 716 hervor. Sie wird anhand einer thermoplastisch verarbeitbaren gummielastischen Mischung spezieller Shore-A-Härten von unter 85 erhalten, die ein thermoplastisches Polyurethan-Elastomer ("TPU") und ein Ethylen/Vinylacetat-Copolymerisat ("EVA") enthalten. Der Vinylacetat-Gehalt des EVA soll zwischen 78 und 95 Gew.-% liegen. In der thermoplastisch verarbeitbaren gummielastischen Mischung sollen bezogen auf die Summe der oben beschriebenen Komponenten, 50 bis 99 Gew.-% TPU auf 1 bis 50 Gew.-% EVA entfallen. Mit dieser Mischung sollen Formkörper und Folien hergestellt werden können, die einerseits weich, elastisch und gut (d.h. ohne zu kleben) verarbeitbar sind, andererseits aber auch hohe Festigkeit, gute Bruchdehnung, hohe Abriebfestigkeit und geringe Quellbarkeit in Kraft- und Schmierstoffen besitzen. Die Anmelderin hat versucht, die in der DE 40 18 716 beschriebene Lehre nachzustellen. Der VA-Gehalt der derzeit im Handel erhältlichen und bedingt kalandrierbaren EVA-Materialien liegt in der Größenordnung von 40 Gew.-%. Wird ein derartiges EVA gemäß den weitergehenden Angaben der DE-A-40 18 716 in einer thermisch verarbeitbaren Mischung eingesetzt, dann läßt sich eine derartige Mischung nicht ohne weiteres durch Kalandrieren zu Folien weiterverarbeiten. Die Schmelzfestigkeit ist zu niedrig. Darüber hinaus treten durch das Kalandieren störende Klebeeffekte auf.

Der Erfindung lag daher die Aufgabe zugrunde, das eingangs bezeichnete thermoplastische Material so weiterzubilden, daß es bezüglich der wünschenswerten Eigenschaften demjenigen nach der DE-A- 40 18 716 entspricht, jedoch beispielsweise durch Kalandrieren besser zu Folien verarbeitet werden kann.

Erfindungsgemäß wird diese Aufgabe durch eine Folie oder einen Formkörper mit den Merkmalen im Anspruch 1 gelöst.

Der Begriff "thermoplastisches Material" soll im Rahmen der Erfindung weitestgehend verstanden werden. Darunter sollen beispielsweise thermoplastische Kunststoffgemische, Polymer-Blends, Polymer-Legierungen bzw. .-propfcopolymere und dergleichen fallen. Im Rahmen der Erfindung können thermoplastische Polyurethane eingesetzt werden, einschließlich thermoplastischer Polyurethane, die in der DE-A-40 18 716 beschrieben werden, d.h. der darin als "TPU" bezeichneten Produkte. Dabei hat es sich gezeigt, daß sowohl bei üblichen thermoplastischen Polyurethanen wie auch diejenigen mit Elastomereigenschaften solche von Vorteil sind, die als Polyole entweder lineare Polyetherdiole oder lineare Polyetherdiole neben Polyesterdiolen oder schwach verzweigte Polyhydroxyverbindungen einer Funktionalität von mindestens 2 enthalten. Für das Kalandrieren, Extrudieren und dergleichen haben sich thermoplastische Polyether-Polyester-Polyurethane und/oder Gemische als besonders vorteilhaft gezeigt. Diese überwiegend aliphatischen und/oder aromatischen Polyether-Polyester-Polyurethane leiten sich vorzugsweise von Hexamethylenglycol (Hexamethylenether), von Polyestern der Adipinsäure und Butandiol einerseits und Isophorondiisocyanat mit Hexandiol andererseits ab, polykondensiert und/oder nachträglich in einem geeigneten Mischaggregat zu den gewünschten Legierungen und/oder Mischungen compoundiert. Auf 40 bis 60 Gew.-% Ether entfallen 60 bis 30 Gew.-% Ester und 10 bis 20 Gew.-% Urethan. Es ist von Vorteil, das oben bezeichnete TPU mit verschiedenen anderen aliphatischen und/oder aromatischen TPU zu mischen oder zu legieren.

Die wesentliche Abweichung von dem oben beschriebenen Stand der Technik besteht darin, daß im Rahmen der Erfindung anstelle des EVA reines Polyvinylacetat herangezogen wird. Vorzugsweise weist dieses einen Erweichungsbereich nach Krämer-Sarnow-Nagel zwischen 92 und 220°C, d.h. z.B. zwischen 92 und 94°C cder z.B. zwischen 195 und 201°C, und einen K-Wert nach DIN 53 726 (1% in Aceton bei +20°C) von 40 bis 120 auf.

Von wesentlicher Bedeutung im Hinblick auf die Optimierung der Eigenschaften der Folie bzw. des Formkörpers gemäß der Erfindung ist die Einbeziehung der oben bezeichneten Komponente C in Form eines thermoplastischen Modifiziermittels und/oder eines elastomermodifizierten Thermoplasts und/oder eines Kautschuks. Das Modifiziermittel dient zur Einregelung der Schmelzfestigkeit und -viskosität, Zähigkeit, der Kalandrier- und Extrudierbarkeit und ähnlicher Eigenschaften. Es kann auch die chemische Beständigkeit, die Lösungsmittelbeständigkeit, Benetzbarkeit, Klebbarkeit und Verschweißbarkeit beeinflussen. In einigen Fällen können auch die Mischbarkeit und Verträglichkeit der einzelnen Komponenten in dem mehrphasigen System gesteuert werden. Bei gezielter Auswahl des Modifiziermittels läßt sich die ganze Reihe der Formmassen mit den wünschenswerten Eigenschaften herstellen, wie z.B. hohe Reißdehnung, hohe Abriebfestigkeit und geringe Quellbarkeit in Kraft- und Schmierstoffen. Kautschukartige Modifiziermittel können zusätzlich zu der inneren bzw. äußeren Weichmachung dienen, während harte Thermoplaste als innere oder äußere Versteifungskomponente geeignet sind.

Das thermoplastische Modifiziermittel beeinflußt auch die Fließ- und Verarbeitungseigenschaften, wobei beim Kalandrieren vorzugsweise Typen eines Erweichungsbereiches von 152 bis 210°C mit einem Schmelzindex (235°C/1 kg) von 1 bis 7 g/10 min und als Extrusions-Typen solche mit einem Schmelzindex von 1,5 bis 15 g/10 min besonders geeignet sind. Bevorzugt sind die kraftstoff- und mineralölbeständigen Thermoplaste, wie Polyamid 6, Polyamid 12, Polyamid 66, Polyamid 69, Polyether-Polyamid-Blockcopolymer, Polyacrylonitrile. Wenn die Polyamide ausgewählt werden, dann haben diese vorzugsweise ein gewichtsmittleres Molekulargewicht Mw von mehr als 18.000 und eine Reißdehnung von mindestens 150%. Vorzugsweise sind sie mit hydrophobierten Füllstoffen gefüllt, z.B. mit Siliciumoxid, Kaliumaluminiumsilicat, Calciumcarbonat. Mit der Zugabe der Füllstoffe bessert sich beispielsweise die Kalandrierbarkeit von Polyamid 6, darüber hinaus auch seine Beständigkeit gegen die Einwirkung von Ölen, Fetten, Kraftstoffen.

Bei der Komponente C kann es sich auch um einen elastomermodifizierten Thermoplast handeln. Vorzugsweise wird als elastomermodifizierter Thermoplast ein elastomermodifiziertes Styrol-Copolymerisat eingesetzt, insbesondere ein elastomermodifiziertes Styrol-Acrylnitril(SAN)-Copolymerisat. Hierunter werden Kautschuk-gepfropfte SAN-Copolymerisate, die mit einem Acrylester- oder EPDM-Kautschuk gepfropft sind, bevorzugt. Weitere besonders gut geeignete elastomermodifizierte Styrol-Copolymerisate sind Styrol-Ethylen-Butadien (hydriert)-Styrol- und/oder

Styrol-Ethylen-Propylen-Blockcopolymerisate. Ferner sind geeignet Polycaprolacton, Ethylen-Vinylacetat-Copolymerisat, Polyvinylacetat und/oder Ethylen-Vinylacetat-Kohlenmonoxid-Terpolymer.

Bei der Komponente C kann es sich auch um einen Kautschuk und/oder vorvernetzten Kautschuk handeln, insbesondere um gegen Kraftstoff und Öl beständige Typen, wie z.B. Acrylnitril-Butadien-Copolymerisat (NBR), carboxylgruppenhaltiger NBR, Fluorkautschuk (FKM) und CO-Epichlorhydrin-Homo- und/oder Copolymerisate oder deren Abmischungen. Wird ein NBR und/oder carboxylgruppenhaltiger NBR eingesetzt, dann sind insbesondere die Typen bevorzugt, die vorvernetzt sind und einen Mooney-Wert (ML 1+4/bei 100°C) von 30 bis 88 und höheren Acrylonitril-Anteil von 30 bis 50%, vorzugsweise von 38 bis 45%, aufweisen. Das thermoplastische Modifiziermittel C kann ein Polyamid, ein Acrylnitril-Metylmetacrylat-Copolymer, ein Polycarbonat, ein Polypropylen, ein mit Maleinsäureanhydrid funktionalisiertes Polypropylen, und ein Polyether-Polyamid-Blockcopolymer sein.

Neben den oben erörterten qualitativen Anforderungen bezüglich der Komponenten A, B und C müssen diese zur Lösung der Aufgabe, von der die Erfindung ausgeht, die bereits bezeichneten quantitativen Rahmenbedingungen erfüllen. Es müssen 100 Gew.-Teile der Komponente A auf 10 bis 35 Gew.-Teile der Komponente B sowie 1 bis 50 Gew.-Teile der Komponente C entfallen. Bevorzugt ist es, wenn 100 Gew.-Teile der Komponente A auf 15 bis 35 Gew.-Teile der Komponente B und 3 bis 35 Gew.-Teile der Komponente C entfallen.

Um im Rahmen der vorliegenden Erfindung eine weitergehende Optimierung vorzunehmen, sollten die Komponenten A, B und C so ausgewählt werden, daß sie sämtlich eine geringe Quellbarkeit in Kraft- und Schmierstoffmitteln aufweisen. Dies hat zur Folge, daß das Fertigprodukt optimale Eigenschaft zeigt.

Die Eigenschaften der thermoplastischen Kunststoffolie, der damit hergestellten Verbundfolie und auch des thermoplastischen Formkörpers können durch verschiedene Zusatzstoffe, die in das thermoplastische Material eingearbeitet werden, modifiziert werden. So können ihm beispielsweise Füllstoffe, wie calcinierte, vorzugsweise hydrophobierte Siliciumdioxide, Kaliumaluminiumsilicate, Talkum, Calciumcarbonate, Metalloxide, vorzugsweise Titanoxid, verschiedene Metallpulver und/oder Ruß, wie auch leitfähiger Ruß, Gleitmittel, wie C₁₂- bis C₂₆- Fettsäuren, Fettalkohole, Fettsäureester und -amide bzw. Mischungen derselben, Farbmittel, wie organische Farbstoffe und Farbpigmente, wie Phthalocyanine oder Ruß, Stabilisatoren, wie Oxidationsverzögerer und Wärmestabilisatoren, z.B. sterisch gehinderte Phenole, Hydrochinone, substituierte Vertreter dieser Gruppe, Phosphite, Phosphonite und/oder Mischungen derselben, Stabilisatoren, wie insbesondere UV-Stabilisatoren, z.B. verschiedene niedermolekulare aber auch hochmolekulare substituierte Resorcine, Salicylate, Benzotriazole und Benzophenone und/oder Mischungen derselben und dergleichen sowie andere übliche Modifizierungsmittel beigefügt werden. Auch können als Zusatzstoff verschiedene Verarbeitungshilfsmittel (PMMA, hochmolekular), Mattierungsmittel (PMMA-Kieselsäure-Gemisch), antistatische Mittel, Flammschutzmittel, die der Folie schwere Entflammbarkeit vermitteln, wie z.B. hydrophobiertes Magnesiumhydroxid, Ammoniumpolyphosphat und dergleichen herangezogen werden. Diese Zusatzstoffe können den zwingend erforderlichen Komponenten A, B und C in üblichen Mischaggregaten beigemischt werden, z.B. mit Innenmischern, kontinuierlichen Einwellenknetern, Ein- oder Zweiwellen-Mischextrudern und dergleichen. Aus dieser homogenisierten Ausgangsmischung kann dann die Folie oder der Formkörper gemäß der Erfindung in üblicher Weise hergestellt werden, so beispielsweise anhand üblicher Kalandriertechniken, in geeigneten Extrudern, Schmelzgießanlagen und auch nach dem Spritzguß.

Die mit der Erfindung verbundenen Vorteile gegenüber dem eingangs geschilderten Stand der Technik liegen insbesondere darin, daß das Kunststoffmaterial eine erhöhte Schmelzfestigkeit aufweist. Beim Kalandrieren treten auch keine störenden Klebeeffekte auf.

Nachfolgend soll die Erfindung anhand von Beispielen noch näher erläutert werden.

### Beispiele 1 bis 3

Anhand der sich aus der nachfolgenden Tabelle ergebenden Rezepturen wurde mittels eines 4-Walzenkalanders eine Grundfolie einer Stärke von etwa 0,8 mm hergestellt. Diese Folie wurde bezüglich verschiedener Eigenschaften gemessen, die von der nachfolgenden Tabelle ebenfalls erfaßt werden.

### Rohstoffe für die Rezepturen der Beispiele 1 bis 3

A1 (TPU-1): lineares aromatisches TPU auf der Basis Polyesterdiol (Adipinsäureester), Methylendiisocyanat und Butandiol -1,4

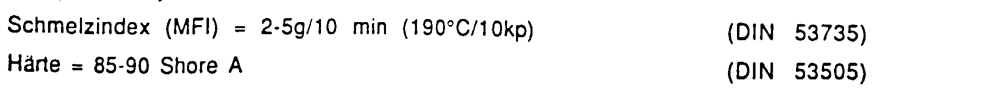

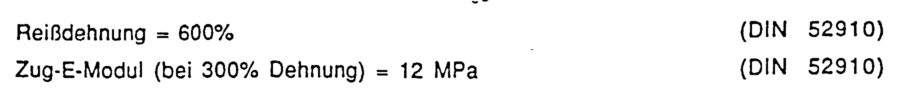

A2 (TPU-2): lineares aliphatisches TPU auf der Basis Hexamethylenether, Polyester von Adipinsäure, Butandiol, Isophorondiisocyanat und Hexandiol mit einem Ether / Ester / Urethan-Verhältnis 60/30/10

| | |
|---|---|
| MFI = 1,5-4 g/10 min (190°C/10kp) | (DIN 53735) |
| Härte = 80-85 Shore A | (DIN 53505) |
| Reißdehnung = 420% | (DIN 52910) |

B-Polyvinylacetat:
Erweichungsbereich (nach Krämer-Sarnow-Nagel): 209-211°C
K-Wert (1% in Aceton bei +20°C) (DIN 53523): 90+-3

C1:ASA: S: 40%; AN: 18%; Kautschuk: 45%

| | |
|---|---|
| Mooney Viskosität (ML 1+4/100°C): 50 | (DIN 53523) |
| Tg (mit DSC festgestellt): -10°C | |

C2: Polyether-Polyamid-Blockcopolymer:

| | |
|---|---|
| MFI = 4+-2 g/10 min (235°C / 1 kg) | (DIN 53735) |
| Härte: 69 Shore D | (DIN 53505) |
| Reißdehnung: 380% | (DIN 52910) |

C3: NBR-Kautschuk (vorvernetzt):

| | |
|---|---|
| Mooney-Viskosität (ML 1+4/100°C): 79 | (DIN 53523) |
| ACN-Gehalt: 42% | |

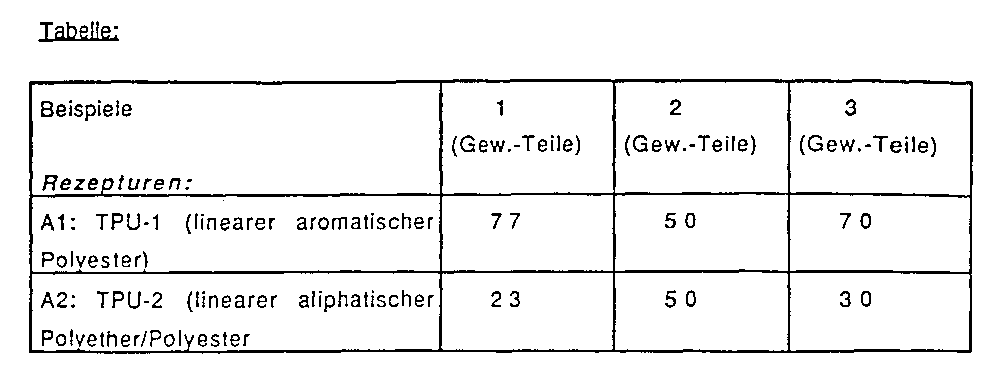

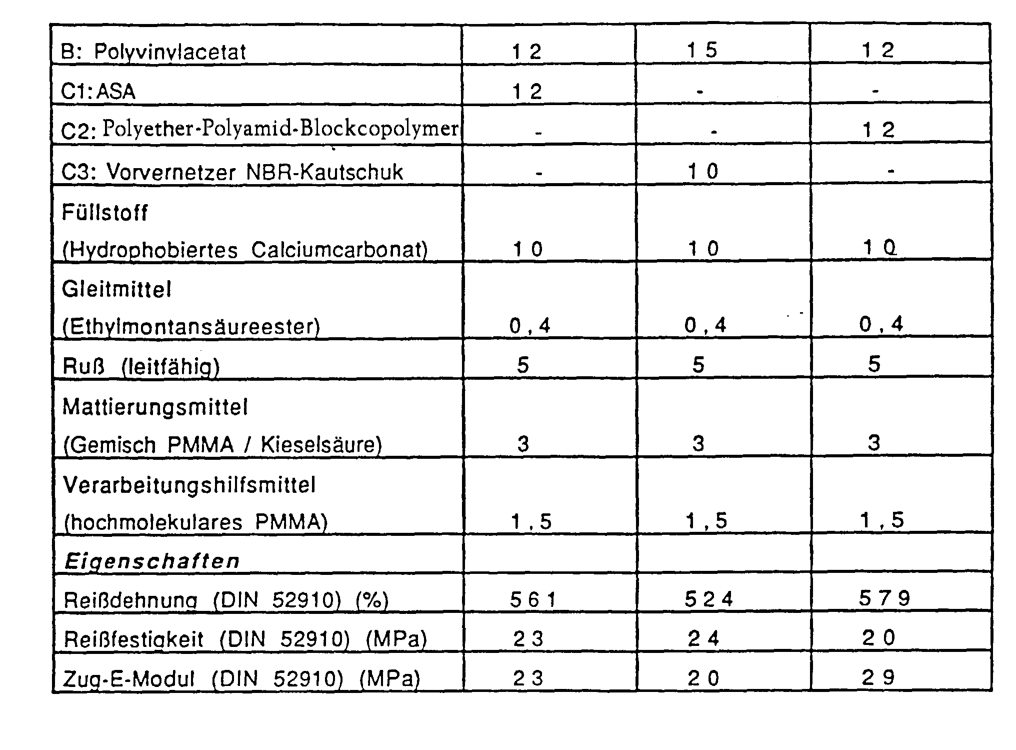

## Patentansprüche

1. Folie oder Formkörper aus einem thermoplastischen Material auf der Basis eines Polyurethans, eines Fließ-und Verarbeitungseigenschaften beeinflussenden Polymerisats und gegebenenfalls weiterer üblicher Zusatzstoffe, dadurch gekennzeichnet, daß das thermoplastische Material neben der Komponente A in Form des thermoplastischen Polyurethans die Komponente B in Form von Polyvinylacetat sowie als Fließ- und Verarbeitungs-Modifiziermittel die Komponente C in Form eines Thermoplasts ausgewählt aus Polyamid, Acrylnitril-Methylmethacrylat-Copolymer, Polycarbonat, Polypropylen, mit Maleinsäureanhydrid funktionalisiertem Polypropylen und Polyether-Polyamid-Blockcopolymer, eines elastomermodifizierten Thermoplasts ausgewählt aus elastomermodifiziertem Styrol-Copolymerisat, Polycaprolacton, Ethylen-Vinylacetat-Copolymer, Polyvinylacetat, und Ethylen-Vinylacetat-Kohlenmonoxid-Terpolymer, und/oder eines Kautschuks ausgewählt aus Acrylnitril-Butadien-Copolymer, carboxylgruppenhaltigem Acrylnitril-Butadien-Copolymer, Fluorkautschuk, CO-Epichlorhydrin-Homo- oder Copolymerisat oder deren Abmischungen, enthält, wobei auf 100 Gew.-Teile der Komponente A 10 bis 35 Gew.-Teile der Komponente B und 1 bis 50 Gewichtsteile der Komponente C entfallen.

2. Folie oder Formkörper nach Anspruch 1, dadurch gekennzeichnet, daß auf 100 Gew.-Teile der Komponente A 15 bis 35 Gew.-Teile der Komponente B und 3 bis 35 Gew.-Teile der Komponente C entfallen.

3. Folie oder Formkörper nach Anspruch 1 oder 2, dadurch gekennzeichnet, daß der Thermoplast in Form eines Polyamids vorliegt.

4. Folie oder Formkörper nach Anspruch 1 oder 2, dadurch gekennzeichnet, daß der elastomermodifizierte Thermoplast ein elastomermodifiziertes Styrol-Copolymerisat ist.

5. Folie oder Formkörper nach Anspruch 1 oder 2, dadurch gekennzeichnet, daß der Kautschuk in Form von acrylnitrilreichem NBR mit einem Acrylnitril-Gehalt von 30 bis 50% vorliegt.

6. Folie oder Formkörper nach mindestens einem der vorhergehenden Ansprüche, dadurch gekennzeichnet, daß das Polyvinylacetat einen zwischen 92 und 200°C liegenden Erweichungsbereich nach Krämer-Sarnow-Nagel und einen K-Wert nach DIN 53 726 (1% in Aceton bei +20°C) von 40 bis 120 aufweist.

7. Folie oder Formkörper nach mindestens einem der vorhergehenden Ansprüche, dadurch gekennzeichnet, daß das thermoplastische Polyurethan als Polyolkomponente ein lineares Polyetherdiol oder ein lineares Polyetherdiol zusammen mit einem linearen Polyesterdiol enthält.

8. Folie oder Formkörper nach mindestens einem der vorhergehenden Ansprüche, dadurch gekennzeichnet, daß der Thermoplast in Form eines Polyether-Polyamid-Blockcopolymers vorliegt.

## Claims

1. Film or shaped body of a thermoplastic material based on a polyurethane, a polymer influencing the flow and processing characteristics and optionally further conventional additives, characterized in that the thermoplastic material, apart from component A in the form of thermoplastic polyurethane, contains component B in the form of polyvinyl acetate, as well as flow and processing modifying agents, component C in the form of a thermoplastic chosen from among polyamide, acrylonitrile-methyl methacrylate copolymer, polycarbonate, polypropylene, polypropylene functionalized with maleic anhydride and polyether-polyamide block copolymers, an elastomer-modified thermopolastic chosen from among elastomer-modified styrene copolymer, polycaprolactone, ethylene-vinyl acetate copolymer, polyvinyl acetate and ethylene-vinyl acetate carbon monoxide terpolymer and/or a rubber chosen from among acrylonitrile-butadiene copolymer, carboxyl group-containing acrylonitrile-butadiene copolymer, fluorinated rubber, CO-epichlorohydrin-homo- or co-polymer or their mixtures and for 100 wt. parts of component A there are 10 to 35 wt. parts of component B and 1 to 50 wt. parts of component C.

2. Film or shaped body according to claim 1, characterized in that for 100 wt. parts of component A there are 15 to 35 wt. parts of component B and 3 to 35 wt. parts of component C.

3. Film or shaped body according to claim 1 or 2, characterized in that the thermoplastic is in the form of a polyamide.

4. Film or shaped body according to claim 1 or 2, characterized in that the elastomer-modified thermoplastic is an elastomer-modified styrene copolymer.

5. Film or shaped body according to claim 1 or 2, characterized in that the rubber is in the form of acrylonitrile-rich NBR with an acrylonitrile content of 30 to 50%.

6. Film or shaped body according to at least one of the preceding claims, characterized in that the polyvinyl acetate has a softening range according to Krämer-Sarnow-Nagel between 92 and 200°C and a K-value according to DIN 53726 (1% in acetone at +20°C) of 40 to 120.

7. Film or shaped body according to at least one of the preceding claims, characterized in that the thermoplastic polyurethane contains as the polyol component a linear polyether diol or a linear polyether diol together with a linear polyester diol.

8. Film or shaped body according to at least one of the preceding claims, characterized in that the thermoplastic is in the form of a polyether-polyamide block copolymer.

## Revendications

1. Feuille ou article moulé en une matière thermoplastique à base d'un polyuréthanne, d'un polymère influençant les propriétés d'écoulement et de mise en oeuvre et, le cas échéant, d'autres additifs classiques, caractérisé en ce que la matière thermoplastique contient, à côté du composant A sous forme du polyuréthanne thermoplastique, le composant B sous forme de poly(acétate de vinyle) ainsi que, comme agent modificateur d'écoulement et de mise en oeuvre, le composant C sous forme d'une matière thermoplastique choisie entre un polyamide, un copolymère acrylonitrileméthacrylate de méthyle, un polycarbonate, un polypropylène, un polypropylène fonctionnalisé avec de l'anhydride d'acide maléique et un copolymère séquencé polyéther-polyamide, sous forme d'une matière thermoplastique modifiée par un élastomère choisie entre un copolymère de styrène modifié par un élastomère, une polycaprolactone, un copolymère éthylèneacétate de vinyle, un polymère d'acétate de vinyle et un terpolymère d'éthylène, d'acétate de vinyle et d'oxyde de carbone, et/ou sous forme d'un caoutchouc choisi entre un copolymère acrylonitrile-butadiène, un copolymère acrylonitrile-butadiène porteur de groupes carboxyle, un caoutchouc fluoré, un homopolymère ou un copolymère CO-épichlorhydrine ou leurs mélanges, les proportions étant de 10 à 35 parties en poids de composant B et de 1 à 50 parties en poids de composant C pour 100 parties en poids du composant A.

2. Feuille ou article moulé suivant la revendication 1, caractérisé en ce que les proportions sont de 15 à 35 parties en poids du composant B et de 3 à 35 parties en poids du composé C pour 100 parties en poids du composant A.

3. Feuille ou article moulé suivant la revendication 1 ou 2, caractérisée en ce que la matière thermoplastique se présente sous forme d'un polyamide.

4. Feuille ou article moulé suivant la revendication 1 ou 2, caractérisé en ce que la matière thermoplastique modifiée par un élastomère est un copolymère de styrène modifié par un élastomère.

5. Feuille ou article moulé suivant la revendication 1 ou 2, caractérisé en ce que le caoutchouc est présent sous forme de NBR riche en acrylonitrile ayant une teneur en acrylonitrile de 30 à 50 %.

6. Feuille ou article moulé suivant l'une au moins des revendications précédentes, caractérisé en ce que le polymère d'acétate de vinyle présente une plage de ramollissement comprise entre 92 et 200°C selon Krämer-Sarnow-Nagel et une valeur K selon la norme DIN 53 726 (à 1 % dans l'acétone à +20°C) de 40 à 120.

7. Feuille ou article moulé suivant au moins l'une des revendications précédentes, caractérisé en ce que le polyuréthanne thermoplastique contient comme composant polyol, un polyétherdiol linéaire ou un polyétherdiol linéaire associé à un polyesterdiol linéaire.

8. Feuille ou article moulé suivant au moins l'une des revendications précédentes, caractérisé en ce que la matière thermoplastique se présente sous forme d'un copolymère séquencé polyéther-polyamide.
